# EUROPEAN PATENT APPLICATION

(11) **EP 4 506 191 A1**
(43) Date of publication of application: **12.02.2025**
(21) Application number: 24189007.8
(22) Date of filing: 16.07.2024
(51) Int. Cl.: B60H 1/00

(54) **VEHICLE THERMAL MANAGEMENT SYSTEM AND TRANSPORTATION REFRIGERATION VEHICLE**

(30) Priority: 17.07.2023 CN 202310877005
(71) Applicant: Carrier Corporation, Palm Beach Gardens, FL 33418 (US)
(72) Inventor: CHEN, Kun, Shanghai, 201206 (CN); TIAN, Hai, Shanghai, 201206 (CN)
(74) Representative: Dehns

(57) **Abstract**

A vehicle thermal management system (100) and a transportation refrigeration vehicle are provided. The vehicle thermal management system comprises: an air conditioning system (100), comprising a compressor (111), a first three-way valve (112), a first outdoor heat exchanger (113), an indoor heat exchanger (114), a regulating valve (115), an intermediate heat exchanger (116), and a first throttling element (117), a second throttling element (118), and a third throttling element (119) with a shut-off function connected through pipelines, and a battery cooling system (120), comprising a second outdoor heat exchanger (121), a battery cooling device (122), and a second three-way valve (123) connected through pipelines. The vehicle thermal management system can not only cool the vehicle battery when the air conditioning system is in a cooling mode, but also cool the vehicle battery when the air conditioning system is in a heating mode, without affecting the independent cooling function of the vehicle battery, which is conducive to ensuring that the vehicle battery is always within the appropriate temperature range during operation.

## Description

### FIELD OF THE INVENTION

The present invention relates to the field of temperature regulation in transportation vehicles, in particular to a vehicle thermal management system and a transportation refrigeration vehicle.

### BACKGROUND OF THE INVENTION

In new energy electric vehicles or hybrid electric vehicles, the power battery plays an important role as an energy carrier for the normal operation of new energy electric vehicles or hybrid electric vehicles. The output power, service life and other performance of the power battery are closely related to the performance and service life of the vehicle.

The power battery must be within a certain temperature range during operation to achieve optimal performance and ensure energy output. Under high temperature conditions, due to the high operating current of the power battery, a large amount of heat is generated. At the same time, the power battery is a relatively closed environment. If the heat is not dissipated in time, it will lead to thermal runaway, shortened lifespan, and damage to the power battery. Therefore, it is necessary to cool the power battery during operation.

### SUMMARY OF THE INVENTION

The present invention aims to provide a vehicle thermal management system and a transportation refrigeration vehicle to at least partially solve or alleviate the problems existing in the prior art.

According to one aspect of the present invention, a vehicle thermal management system is provided, comprising:
an air conditioning system, comprising a compressor, a first three-way valve, a first outdoor heat exchanger, an indoor heat exchanger, a regulating valve, an intermediate heat exchanger, and a first throttling element, a second throttling element, and a third throttling element with a shut-off function connected through pipelines, wherein, the first three-way valve has a first port for communicating with an exhaust port of the compressor, a second port for communicating with a first end of the first outdoor heat exchanger, and a third port for communicating with a first end of the indoor heat exchanger; a second end of the first outdoor heat exchanger is connected to the first end of the indoor heat exchanger through the first throttling element, and at the same time, the second end of the first outdoor heat exchanger is connected to a suction port of the compressor through the second throttling element and the intermediate heat exchanger; a second end of the indoor heat exchanger is connected to the suction port of the compressor through the regulating valve, and at the same time, the second end of the indoor heat exchanger is connected to the suction port of the compressor through the third throttling element and the intermediate heat exchanger; and
a battery cooling system, comprising a second outdoor heat exchanger, a battery cooling device, and a second three-way valve connected through pipelines, wherein, the second three-way valve has a first port for communicating with an outlet of the battery cooling device, a second port for communicating with the intermediate heat exchanger, and a third port for communicating with a first end of the second outdoor heat exchanger; an inlet of the battery cooling device and a second end of the second outdoor heat exchanger are simultaneously connected to the intermediate heat exchanger.

Optionally, the regulating valve is a stepless regulating valve.

Optionally, the vehicle thermal management system comprises a controller that communicates with the regulating valve, the first throttling element, the second throttling element, the third throttling element, or any combination thereof.

Optionally, the vehicle thermal management system comprises: a compartment cooling and battery cooling mode, wherein, the controller instructs to turn on the first throttling element, the second throttling element, the first port and second port of the first three-way valve, and the regulating valve, and to turn off the third throttling element, the third port of the first three-way valve, so that the first throttling element and the second throttling element play a throttling role, thereby allowing a first part of the refrigerant of the air conditioning system to sequentially flow through the exhaust port of the compressor, the first port of the first three-way valve, the second port of the first three-way valve, the first outdoor heat exchanger, the first throttling element, the indoor heat exchanger, the regulating valve and the suction port of the compressor, and at the same time allowing a second part of the refrigerant of the air conditioning system to sequentially flow through the exhaust port of the compressor, the first port of the first three-way valve, the second port of the first three-way valve, the first outdoor heat exchanger, the second throttling element, the intermediate heat exchanger, and the suction port of the compressor; and
the controller instructs to turn on the first port and second port of the second three-way valve, and to turn off the third port of the second three-way valve, so that the coolant of the battery cooling system sequentially flows through the outlet of the battery cooling device, the first port of the second three-way valve, the second port of the second three-way valve, the intermediate heat exchanger, and the inlet of the battery cooling device.

Optionally, the vehicle thermal management system comprises: a compartment heating and battery cooling mode, wherein, the controller instructs to turn on the third throttling element, the first port and third port of the first three-way valve, and to turn off the first throttling element, the second throttling element, the second port of the first three-way valve, and the regulating valve, so that the third throttling element plays a throttling role, thereby allowing the refrigerant of the air conditioning system to sequentially flow through the exhaust port of the compressor, the first port of the first three-way valve, the third port of the first three-way valve, the indoor heat exchanger, the third throttling element, the intermediate heat exchanger, and the suction port of the compressor; and
the controller instructs to turn on the first port and second port of the second three-way valve, and to turn off the third port of the second three-way valve, so that the coolant of the battery cooling system sequentially flows through the outlet of the battery cooling device, the first port of the second three-way valve, the second port of the second three-way valve, the intermediate heat exchanger, and the inlet of the battery cooling device.

Optionally, the vehicle thermal management system comprises: a compartment cooling and battery natural cooling mode, wherein, the controller instructs to turn on the first throttling element, the first port and second port of the first three-way valve, and the regulating valve, and to turn off the second throttling element, the third throttling element, and the third port of the first three-way valve, so that the first throttling element plays a throttling role, thereby allowing the refrigerant of the air conditioning system to sequentially flow through the exhaust port of the compressor, the first port of the first three-way valve, the second port of the first three-way valve, the first outdoor heat exchanger, the first throttling element, the indoor heat exchanger, the regulating valve and the suction port of the compressor; and
the controller instructs to turn on the first port and the third port of the second three-way valve, and to turn off the second port of the second three-way valve, so that the coolant of the battery cooling system sequentially flows through the outlet of the battery cooling device, the first port of the second three-way valve, the third port of the second three-way valve, the second outdoor heat exchanger, and the inlet of the battery cooling device.

According to another aspect of the present invention, a vehicle thermal management system is provided, comprising:
an air conditioning system, comprising a compressor, a first three-way valve, a first outdoor heat exchanger, an indoor heat exchanger, a regulating valve, an intermediate heat exchanger, a first one-way valve, a second one-way valve, and a first throttling element and a second throttling element with a shut-off function connected through pipelines, wherein, the first three-way valve has a first port for communicating with an exhaust port of the compressor, a second port for communicating with a first end of the first outdoor heat exchanger, and a third port for communicating with a first end of the indoor heat exchanger; a second end of the first outdoor heat exchanger is connected to the first end of the indoor heat exchanger through the first throttling element, and at the same time, the second end of the first outdoor heat exchanger is connected to a suction port of the compressor through the first one-way valve, the second throttling element, and the intermediate heat exchanger; a second end of the indoor heat exchanger is connected to the suction port of the compressor through the regulating valve, and at the same time, the second end of the indoor heat exchanger is connected to the suction port of the compressor through the second one-way valve, the second throttling element, and the intermediate heat exchanger; and
a battery cooling system, comprising a second outdoor heat exchanger, a battery cooling device, and a second three-way valve connected through pipelines, wherein, the second three-way valve has a first port for communicating with an outlet of the battery cooling device, a second port for communicating with the intermediate heat exchanger, and a third port for communicating with a first end of the second outdoor heat exchanger; an inlet of the battery cooling device and a second end of the second outdoor heat exchanger are simultaneously connected to the intermediate heat exchanger.

Optionally, the regulating valve is a stepless regulating valve.

Optionally, the vehicle thermal management system comprises a controller that communicates with the regulating valve, the first throttling element, the second throttling element, or any combination thereof.

Optionally the vehicle thermal management system comprises: a compartment cooling and battery cooling mode, wherein, the controller instructs to turn on the first throttling element, the second throttling element, the first port and second port of the first three-way valve, and the regulating valve, and to turn off the third port of the first three-way valve, so that the first throttling element and the second throttling element play a throttling role, thereby allowing a first part of the refrigerant of the air conditioning system to sequentially flow through the exhaust port of the compressor, the first port of the first three-way valve, the second port of the first three-way valve, the first outdoor heat exchanger, the first throttling element, the indoor heat exchanger, the regulating valve, and the suction port of the compressor, and at the same time allowing a second part of the refrigerant of the air conditioning system to sequentially flow through the exhaust port of the compressor, the first port of the first three-way valve, the second port of the first three-way valve, the first outdoor heat exchanger, the first one-way valve, the second throttling element, the intermediate heat exchanger, and the suction port of the compressor; and
the controller instructs to turn on the first port and second port of the second three-way valve, and to turn off the third port of the second three-way valve, so that the coolant of the battery cooling system sequentially flows through the outlet of the battery cooling device, the first port of the second three-way valve, the second port of the second three-way valve, the intermediate heat exchanger, and the inlet of the battery cooling device.

Optionally, the vehicle thermal management system comprises: a compartment heating and battery cooling mode, wherein, the controller instructs to turn on the second throttling element, the first port and third port of the first three-way valve, and to turn off the first throttling element, the second port of the first three-way valve, and the regulating valve, so that the second throttling element plays a throttling role, thereby allowing the refrigerant of the air conditioning system to sequentially flow through the exhaust port of the compressor, the first port of the first three-way valve, the third port of the first three-way valve, the indoor heat exchanger, the second one-way valve, the second throttling element, the intermediate heat exchanger, and the suction port of the compressor; and
the controller instructs to turn on the first port and the second port of the second three-way valve, and to turn off the third port of the second three-way valve, so that the coolant of the battery cooling system sequentially flows through the outlet of the battery cooling device, the first port of the second three-way valve, the second port of the second three-way valve, the intermediate heat exchanger, and the inlet of the battery cooling device.

Optionally, the vehicle thermal management system comprises: a compartment cooling and battery natural cooling mode, wherein, the controller instructs to turn on the first throttling element, the first port and second port of the first three-way valve, and the regulating valve, and to turn off the second throttling element, and the third port of the first three-way valve, so that the first throttling element plays a throttling role, thereby allowing the refrigerant of the air conditioning system to sequentially flow through the exhaust port of the compressor, the first port of the first three-way valve, the second port of the first three-way valve, the first outdoor heat exchanger, the first throttling element, the indoor heat exchanger, the regulating valve and the suction port of the compressor; and
the controller instructs to turn on the first port and third port of the second three-way valve, and to turn off the second port of the second three-way valve, so that the coolant of the battery cooling system sequentially flows through the outlet of the battery cooling device, the first port of the second three-way valve, the third port of the second three-way valve, the second outdoor heat exchanger, and the inlet of the battery cooling device.

According to another aspect of the present invention, a transport refrigeration vehicle is provided, comprising the aforementioned vehicle thermal management system according to either aspect described above, and optionally including any of the described optional features.

It can be appreciated that the vehicle thermal management system according to the present invention can not only cool the vehicle battery when the air conditioning system is in a cooling mode, but also cool the vehicle battery when the air conditioning system is in a heating mode, without affecting the independent cooling function of the vehicle battery, which is conducive to ensuring that the vehicle battery is always within the appropriate temperature range during operation.

### BRIEF DESCRIPTION OF THE DRAWINGS

The disclosure of the present invention will become easier to understand by referring to the accompanying drawings. It is easy for those skilled in the art to understand that these drawings are only for illustrative purposes and are not intended to limit the scope of protection of the present invention which is defined by the appended claims. Similar numbers in the figures are used to denote similar components. Preferred embodiments will now be described by way of example only and with reference to the accompanying drawings, in which:
FIG. 1 shows a structural schematic diagram of a first example of a vehicle thermal management system; and
FIG. 2 shows a structural schematic diagram of a second example of a vehicle thermal management system.

### DETAILED DESCRIPTION

Embodiments of the present invention will be described in detail hereinafter with reference to the accompanying drawings. However, it should be understood that the present invention can be implemented in many different forms, and should not be construed as being limited to the embodiments set forth herein. These embodiments are provided here for the purpose of making the disclosure of the present application more complete and comprehensive, and fully conveying the concept to those skilled in the art.

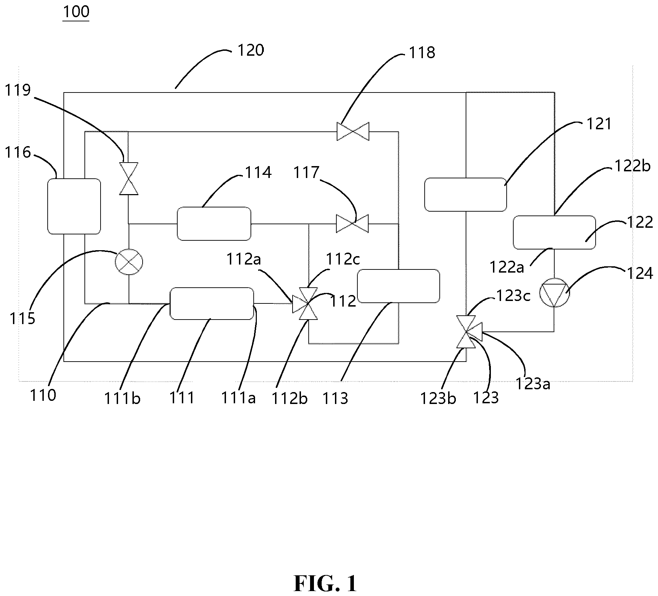

Referring to FIG. 1, an embodiment of a vehicle thermal management system is illustrated. The vehicle thermal management system 100 comprises an air conditioning system 110 and a battery cooling system 120. When taking a transportation vehicle as an example, the air conditioning system 110 is mainly used for cooling or heating the respective compartments for storage of goods or of the driver's cabin, while the battery cooling system 120 is mainly used for cooling the vehicle battery.

Specifically, the air conditioning system 110 comprises a compressor 111, a first three-way valve 112, a first outdoor heat exchanger 113, an indoor heat exchanger 114, a regulating valve 115, an intermediate heat exchanger 116, and a first throttling element 117, a second throttling element 118, and a third throttling element 119 with a shut-off function connected through pipelines. The first three-way valve 112 has a first port 112a for communicating with an exhaust port 111a of the compressor 111, a second port 112b for communicating with a first end of the first outdoor heat exchanger 113, and a third port 112c for communicating with the first end of the indoor heat exchanger 114. The second end of the first outdoor heat exchanger 113 is connected to the first end of the indoor heat exchanger 114 through the first throttling element 117, and at the same time the second end of the first outdoor heat exchanger 113 is connected to a suction port 111b of the compressor 111 through the second throttling element 118 and the intermediate heat exchanger 116. The second end of the indoor heat exchanger 114 is connected to the suction port 111b of the compressor 111 through the regulating valve 115, and at the same time the second end of the indoor heat exchanger 114 is connected to the suction port 111b of the compressor 111 through the third throttling element 119 and the intermediate heat exchanger 116.

The battery cooling system 120 comprises a second outdoor heat exchanger 121, a battery cooling device 122, and a second three-way valve 123 connected through pipelines. Wherein, the second three-way valve 123 has a first port 123a for communicating with an outlet 122a of the battery cooling device 122, a second port 123b for communicating with the intermediate heat exchanger 116, and a third port 123c for communicating with the first end of the second outdoor heat exchanger 121. An inlet 122b of the battery cooling device 122 and the second end of the second outdoor heat exchanger 121 are simultaneously connected to the intermediate heat exchanger 116.

The vehicle thermal management system 100 with such an arrangement achieves heat exchange between the refrigerant of the air conditioning system 110 and the coolant of the battery cooling system 120 through an intermediate heat exchanger 116, allowing the air conditioning system 110 to cool the vehicle battery while cooling and heating.

Various possible modifications of the vehicle thermal management system will be described below in conjunction with the appended drawings. In addition, for the purpose of further improving system energy efficiency or reliability etc., additional components can be added, as will also be exemplarily illustrated below. For example, the regulating valve 115 can be a stepless regulating valve. The vehicle thermal management system 100 may further comprise a controller (not shown) that communicates with the regulating valve 115, the first throttling element 117, the second throttling element 118, the third throttling element 119, or any combination thereof. The battery cooling system 120 may be equipped with a pumping device for providing power to the coolant.

The vehicle thermal management system 100 can achieve a compartment cooling and battery cooling mode. An illustrative example will be described below in conjunction with FIG. 1.

With continued reference to FIG. 1, specifically, when executing the compartment cooling and battery cooling mode, the controller instructs to turn on the first throttling element 117, the second throttling element 118, the first port 112a and second port 112b of the first three-way valve 112, and the regulating valve 115, and to turn off the third throttling element 119, and the third port 112c of the first three-way valve 112, so that the first throttling element 117 and the second throttling element 118 play a throttling role; and the controller instructs to turn on the first port 123a and second port 123b of the second three-way valve 123, and to turn off the third port 123c of the second three-way valve 123.

On the air conditioning system side, the refrigerant of the air conditioning system 110 first enters the compressor 111 to achieve gas-phase compression. Then, the first part of the refrigerant flows from the exhaust port 11 1a of the compressor 111 through the first port 112a of the first three-way valve 112 and the second port 112b of the first three-way valve 112 into the first outdoor heat exchanger 113 for condensation and heat dissipation. The refrigerant then flows through the first throttling element 117 into the indoor heat exchanger 114, where the refrigerant can enter the indoor heat exchanger 114 for evaporation and heat absorption after undergoing throttling expansion in the first throttling element 117, thereby providing cooling for the compartment. When the refrigerant returns to the suction port 111b of the compressor 111 after passing through the regulating valve 115, the cycle is completed.

Meanwhile, the second part of the refrigerant flows from the exhaust port 111a of the compressor 111 through the first port 112a of the first three-way valve 112 and the second port 112b of the first three-way valve 112 into the first outdoor heat exchanger 113 for condensation and heat dissipation. The refrigerant then flows through the second throttling element 118 into the intermediate heat exchanger 116, where the refrigerant can enter the intermediate heat exchanger 116 after undergoing throttling expansion in the second throttling element 118, thereby achieving heat exchange between the refrigerant and the coolant of the battery cooling system 120. When the refrigerant exchanges heat with the coolant of the battery cooling system 120 and then returns to the suction port 111b of the compressor 111, the cycle is completed.

On the battery cooling system side, the coolant of the battery cooling system 120 flows from the outlet 122a of the battery cooling device 122 through the first port 123a of the second three-way valve 123 and the second port 123b of the second three-way valve 123 into the intermediate heat exchanger 116, thereby achieving heat exchange between the coolant and the refrigerant of the air conditioning system 110, thus further reducing the temperature of the coolant. Subsequently, the coolant that has undergone heat exchange returns to the inlet 122b of the battery cooling device 122, thereby cooling the battery cooling device 122, thus completing the cycle.

It should be noted that the first throttling element 117, the second throttling element 118, and the third throttling element 119 can all play a role in throttling expansion. However, two of them can also be made to be completely turned off, while the remaining one can regulate its opening to play a role in throttling expansion.

The vehicle thermal management system 100 can also achieve a compartment heating and battery cooling mode. An illustrative example will be described below in conjunction with FIG. 1.

With continued reference to FIG. 1, specifically, when executing the compartment heating and battery cooling mode, the controller instructs to turn on the third throttling element 119, the first port 112a and third port 112c of the first three-way valve 112, and to turn off the first throttling element 117, the second throttling element 118, the second port 112b of the first three-way valve 112, and the regulating valve 115, so that the third throttling element 119 plays a throttling role; and the controller instructs to turn on the first port 123a and second port 123b of the second three-way valve 123, and to turn off the third port 123c of the second three-way valve 123.

On the air conditioning system side, the refrigerant of the air conditioning system 110 first enters the compressor 111 to achieve gas-phase compression. Then, the refrigerant flows from the exhaust port 111a of the compressor 111 through the first port 112a of the first three-way valve 112 and the third port 112c of the first three-way valve 112 into the indoor heat exchanger 114 for condensation and heat dissipation, thereby providing heating for the compartment. The refrigerant then flows through the third throttling element 119 into the intermediate heat exchanger 116, where the refrigerant can enter the intermediate heat exchanger 116 after undergoing throttling expansion in the third throttling element 119, thereby achieving heat exchange between the refrigerant and the coolant of the battery cooling system 120. When the refrigerant exchanges heat with the coolant of the battery cooling system 120 and then returns to the suction port 111b of the compressor 111, the cycle is completed.

On the battery cooling system side, the coolant of the battery cooling system 120 flows from the outlet 122a of the battery cooling device 122 through the first port 123a of the second three-way valve 123 and the second port 123b of the second three-way valve 123 into the intermediate heat exchanger 116, thereby achieving heat exchange between the coolant and the refrigerant of the air conditioning system 110, thus further reducing the temperature of the coolant. Subsequently, the coolant that has undergone heat exchange returns to the inlet 122b of the battery cooling device 122, so as to cool the battery cooling device 122, thus completing the cycle.

The vehicle thermal management system 100 can also achieve a compartment cooling and battery natural cooling mode. An illustrative example will be described below in conjunction with FIG. 1.

With continued reference to FIG. 1, specifically, when executing the compartment cooling and battery natural cooling mode, the controller instructs to turn on the first throttling element 117, the first port 112a and second port 112b of the first three-way valve 112, and the regulating valve 115, and to turn off the second throttling element 118, the third throttling element 119, and the third port 112c of the first three-way valve 112, so that the first throttling element 117 plays a throttling role; and the controller instructs to turn on the first port 123a and third port 123c of the second three-way valve 123, and to turn off the second port 123b of the second three-way valve 123.

On the air conditioning system side, the refrigerant of the air conditioning system 110 first enters the compressor 111 to achieve gas-phase compression. Then, the refrigerant flows from the exhaust port 111a of the compressor 111 through the first port 112a of the first three-way valve 112 and the second port 112b of the first three-way valve 112 into the first outdoor heat exchanger 113 for condensation and heat dissipation. The refrigerant then flows through the first throttling element 117 into the indoor heat exchanger 114, where the refrigerant can enter the indoor heat exchanger 114 for evaporation and heat absorption after undergoing throttling expansion in the first throttling element 117, thereby providing cooling for the compartment. When the refrigerant returns to the suction port 111b of the compressor 111 after passing through the regulating valve 115, the cycle is completed.

On the battery cooling system side, the coolant of the battery cooling system 120 flows from the outlet 122a of the battery cooling device 122 through the first port 123a of the second three-way valve 123 and the third port 123c of the second three-way valve 123, and enters the second outdoor heat exchanger 121, thereby exchanging heat between the coolant and the air through air cooling and other means, thus further reducing the temperature of the coolant. Subsequently, the coolant that has undergone heat exchange returns to the inlet 122b of the battery cooling device 122, thereby cooling the battery cooling device 122, thus completing the cycle.

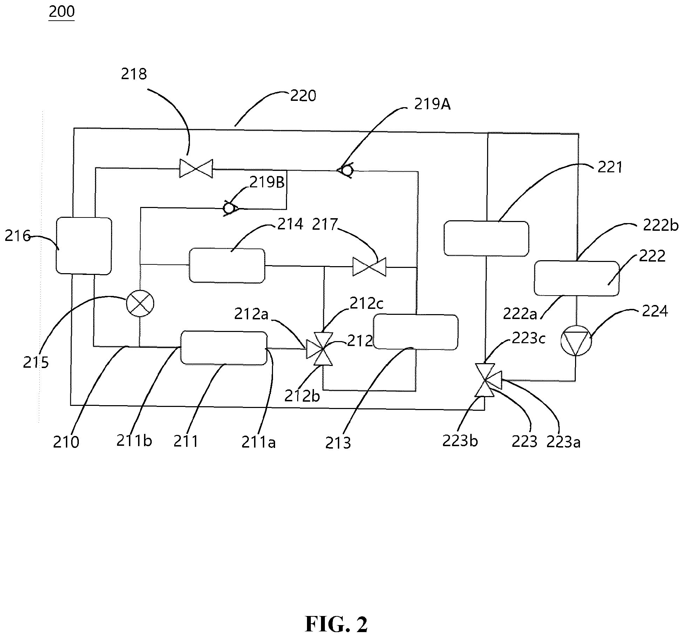

Referring to FIG. 2, another embodiment of a vehicle thermal management system is illustrated. The vehicle thermal management system 200 comprises an air conditioning system 210 and a battery cooling system 220. The functions and principles of the air conditioning system 210 and the battery cooling system 220 in the embodiment shown in FIG. 2 can refer to the aforementioned embodiment, and will not be repeated here.

Specifically, the air conditioning system 210 comprises a compressor 211, a first three-way valve 212, a first outdoor heat exchanger 213, an indoor heat exchanger 214, a regulating valve 215, an intermediate heat exchanger 216, a first throttling element 217 and a second throttling element 218 with a shut-off function, a first one-way valve 219A, and a second one-way valve 219B connected through pipelines. The first three-way valve 212 has a first port 212a for communicating with the exhaust port 211a of the compressor 211, a second port 212b for communicating with a first end of the first outdoor heat exchanger 213, and a third port 212c for communicating with a first end of the indoor heat exchanger 214. The second end of the first outdoor heat exchanger 213 is connected to the first end of the indoor heat exchanger 214 through the first throttling element 217, and at the same time, the second end of the first outdoor heat exchanger 213 is connected to a suction port 211b of the compressor 211 through the first one-way valve 219A, the second throttling element 218, and the intermediate heat exchanger 216. The second end of the indoor heat exchanger 214 is connected to the suction port 211b of the compressor 211 through the regulating valve 215, and at the same time, the second end of the indoor heat exchanger 214 is connected to the suction port 211b of the compressor 211 through the second one-way valve 219B, the second throttling element 218, and the intermediate heat exchanger 216.

The battery cooling system 220 comprises a second outdoor heat exchanger 221, a battery cooling device 222, and a second three-way valve 223 connected through pipelines, wherein, the second three-way valve 223 has a first port 223a for communicating with an outlet 222a of the battery cooling device 222, a second port 223b for communicating with the intermediate heat exchanger 216, and a third port 223c for communicating with the first end of the second outdoor heat exchanger 221. An inlet 222b of the battery cooling device 222 and a second end of the second outdoor heat exchanger 221 are simultaneously connected to the intermediate heat exchanger 216.

The vehicle thermal management system 200 with such an arrangement achieves heat exchange between the refrigerant of the air conditioning system 210 and the coolant of the battery cooling system 220 through an intermediate heat exchanger 216, allowing the air conditioning system 210 to cool the vehicle battery while cooling and heating.

Various possible modifications of the vehicle thermal management system will be described below in conjunction with the appended drawings. In addition, for the purpose of further improving system energy efficiency or reliability, additional components can be added, as will also be exemplarily illustrated below. For example, the regulating valve 215 can be a stepless regulating valve. The vehicle thermal management system 200 can further comprise a controller (not shown) that communicates with the regulating valve 215, the first throttling element 217, the second throttling element 218, or any combination thereof. The battery cooling system 220 can comprise a pumping device 224 for providing power to the coolant.

The vehicle thermal management system 200 can achieve a compartment cooling and battery cooling mode. An illustrative example will be described below in conjunction with FIG. 2.

With continued reference to FIG. 2, specifically, when executing the compartment cooling and battery cooling mode, the controller instructs to turn on the first throttling element 217, the second throttling element 218, the first port 212a and second port 212b of the first three-way valve 212, the regulating valve 215, and to turn off the third port 212c of the first three-way valve 212, so that the first throttling element 217 and the second throttling element 218 play a throttling role; and the controller instructs to turn on the first port 223a and second port 223b of the second three-way valve 223, and to turn off the third port 223c of the second three-way valve 223.

On the air conditioning system side, the refrigerant of the air conditioning system 210 first enters the compressor 211 to achieve gas-phase compression. Then, the first part of the refrigerant flows from the exhaust port 211a of the compressor 211 through the first port 212a of the first three-way valve 212 and the second port 212b of the first three-way valve 212 into the first outdoor heat exchanger 213 for condensation and heat dissipation. The refrigerant then flows through the first throttling element 217 into the indoor heat exchanger 214, where the refrigerant can enter the indoor heat exchanger 214 for evaporation and heat absorption after undergoing throttling expansion in the first throttling element 217, thereby providing cooling for the compartment. When the refrigerant returns to the suction port 211b of the compressor 211 after passing through the regulating valve 215, the cycle is completed.

Meanwhile, the second part of the refrigerant flows from the exhaust port 211a of the compressor 211 through the first port 212a of the first three-way valve 212 and the second port 212b of the first three-way valve 212 into the first outdoor heat exchanger 213 for condensation and heat dissipation. The refrigerant then flows through the first one-way valve 219A into the second throttling element 218, and can enter the intermediate heat exchanger 216 after undergoing throttling expansion in the second throttling element 218, thereby achieving heat exchange between the refrigerant and the coolant of the battery cooling system 220. When the refrigerant exchanges heat with the coolant of the battery cooling system 220 and then returns to the suction port 211b of the compressor 211, the cycle is completed.

On the battery cooling system side, the coolant of the battery cooling system 220 flows from the outlet 222a of the battery cooling device 222 through the first port 223a of the second three-way valve 223 and the second port 223b of the second three-way valve 223 into the intermediate heat exchanger 216, thereby exchanging heat with the refrigerant of the air conditioning system 210, thus further reducing the temperature of the coolant. Subsequently, the coolant that has undergone heat exchange returns to the inlet 222b of the battery cooling device 222, thereby cooling the battery cooling device 222, thus completing the cycle.

It should be noted that both the first throttling element 217 and the second throttling element 218 can play a role in throttling expansion. However, one of them can also be completely turned off, while the other can regulate its opening to play a role in throttling expansion.

The vehicle thermal management system 200 can also achieve a compartment heating and battery cooling mode. An illustrative example will be described below in conjunction with FIG. 2.

With continued reference to FIG. 2, specifically, when executing the compartment heating and battery cooling mode, the controller instructs to turn on the second throttling element 218, the first port 212a and third port 212c of the first three-way valve 212, and to turn off the first throttling element 217, the second port 212b of the first three-way valve 212, and the regulating valve 215, so that the second throttling element 218 plays a throttling role; and the controller instructs to turn on the first port 223a and second port 223b of the second three-way valve 223, and to turn off the third port 223c of the second three-way valve 223.

On the air conditioning system side, the refrigerant of the air conditioning system 210 first enters the compressor 211 to achieve gas-phase compression. Then, the refrigerant flows from the exhaust port 211a of the compressor 211 through the first port 212a of the first three-way valve 212 and the third port 212c of the first three-way valve 212 into the indoor heat exchanger 214 for condensation and heat dissipation, thereby providing heating for the compartment. The refrigerant then flows through the second one-way valve 219B and the second throttling element 218 into the intermediate heat exchanger 216, where the refrigerant can enter the intermediate heat exchanger 216 after undergoing throttling expansion in the second throttling element 218, thereby achieving heat exchange between the refrigerant and the coolant of the battery cooling system 220. When the refrigerant exchanges heat with the coolant of the battery cooling system 220 and then returns to the suction port 211b of the compressor 211, the cycle is completed.

On the battery cooling system side, the coolant of the battery cooling system 220 flows from the outlet 222a of the battery cooling device 222 through the first port 223a of the second three-way valve 223 and the second port 223b of the second three-way valve 223 into the intermediate heat exchanger 216, thereby achieving heat exchange between the coolant and the refrigerant of the air conditioning system 210, thus further reducing the temperature of the coolant. Subsequently, the coolant that has undergone heat exchange returns to the inlet 222b of the battery cooling device 222, thereby cooling the battery cooling device 222, thus completing the cycle.

The vehicle thermal management system 200 can also achieve a compartment cooling and battery natural cooling mode. An illustrative example will be described below in conjunction with FIG. 2.

With continued reference to FIG. 2, specifically, when executing the compartment cooling and battery natural cooling mode, the controller instructs to turn on the first throttling element 217, the first port 212a and second port 212b of the first three-way valve 212, and the regulating valve 215, and to turn off the second throttling element 218 and the third port 212c of the first three-way valve 212, so that the first throttling element 217 plays a throttling role; and the controller instructs to turn on the first port 223a and the third port 223c of the second three-way valve 223, and to turn off the second port 223b of the second three-way valve 223.

On the air conditioning system side, the refrigerant of the air conditioning system 210 first enters the compressor 211 to achieve gas-phase compression. Then, the refrigerant flows from the exhaust port 211a of the compressor 211 through the first port 212a of the first three-way valve 212 and the second port 212b of the first three-way valve 212 into the first outdoor heat exchanger 213 for condensation and heat dissipation. The refrigerant then flows through the first throttling element 217 into the indoor heat exchanger 214, where the refrigerant can enter the indoor heat exchanger 214 for evaporation and heat absorption after undergoing throttling expansion in the first throttling element 217, thereby providing cooling for the compartment. When the refrigerant returns to the suction port 211b of the compressor 211 after passing through the regulating valve 215, the cycle is completed.

On the battery cooling system side, the coolant of the battery cooling system 220 flows from the outlet 222a of the battery cooling device 222 through the first port 223a of the second three-way valve 223 and the third port 223c of the second three-way valve 223 into the second outdoor heat exchanger 221, thereby achieving heat exchange between the coolant and air through air cooling and other means, thus further reducing the temperature of the coolant. Subsequently, the coolant that has undergone heat exchange returns to the inlet 222b of the battery cooling device 222, thereby cooling the battery cooling device 222, thus completing the cycle.

In addition, although not shown in the figures, an embodiment of a transportation refrigeration vehicle is also provided here. The transportation refrigeration vehicle can be a new energy electric vehicle or a hybrid electric vehicle, and comprises a vehicle thermal management system according to any of the aforementioned embodiments or combinations thereof. Therefore, it also has the corresponding technical effects, which will not be repeated here.

In this specification, it should be appreciated that the terms "first" and "second" are only used for descriptive purposes and cannot be construed as indicating or implying relative importance or implying the quantity of technical features indicated. Therefore, the features limited with "first" and "second" can explicitly or implicitly include at least one of these features. In this specification, "a plurality of" means at least two, such as two, three, etc., unless otherwise specified.

In the present specification, unless otherwise specified and limited, the terms "connect", "communicate" and other terms should be interpreted in a broad sense, which can be, for example, a fixed connection, a detachable connection, or integrally formed; or can be a direct connection or an indirect connection through an intermediate medium; or can be an internal connection of two components or the interaction relationship between two components, unless otherwise specified. For those skilled in the art, the specific meanings of the above terms in the present specification can be interpreted based on specific circumstances. In this specification, where it is mentioned that the "controller instructs to", this may also be described as that the "controller issues (or provides) instructions to", "controller is configured to" or that the "controller is configured to issue instructions to".

The above examples mainly illustrate a vehicle thermal management system and a transportation refrigeration vehicle of embodiments of the present invention. Although only some embodiments of the present invention have been described, those skilled in the art should be aware that the present invention can be implemented in many other forms without deviating from its main idea and scope as defined in the appended claims. Therefore, the examples and embodiments illustrated are considered as illustrative rather than restrictive. Without departing from the scope of the present invention as defined in the appended claims, the present invention may encompass various modifications and substitutions.

## Claims

1. A vehicle thermal management system (100), comprising:
an air conditioning system (100), comprising a compressor (111), a first three-way valve (112), a first outdoor heat exchanger (113), an indoor heat exchanger (114), a regulating valve (115), an intermediate heat exchanger (116), and a first throttling element (117), a second throttling element (118), and a third throttling element (119) with a shut-off function connected through pipelines, wherein, the first three-way valve has a first port (112a) for communicating with an exhaust port (111a) of the compressor, a second port (112b) for communicating with a first end of the first outdoor heat exchanger, and a third port (112c) for communicating with a first end of the indoor heat exchanger; wherein a second end of the first outdoor heat exchanger is connected to the first end of the indoor heat exchanger through the first throttling element, and at the same time, the second end of the first outdoor heat exchanger is connected to a suction port (111b) of the compressor through the second throttling element and the intermediate heat exchanger; wherein a second end of the indoor heat exchanger is connected to the suction port of the compressor through the regulating valve, and at the same time, the second end of the indoor heat exchanger is connected to the suction port of the compressor through the third throttling element and the intermediate heat exchanger; and
a battery cooling system (120), comprising a second outdoor heat exchanger (121), a battery cooling device (122), and a second three-way valve (123) connected through pipelines, wherein, the second three-way valve has a first port (123a) for communicating with an outlet (122a) of the battery cooling device, a second port (123b) for communicating with the intermediate heat exchanger, and a third port (123c) for communicating with a first end of the second outdoor heat exchanger; wherein an inlet (122b) of the battery cooling device and a second end of the second outdoor heat exchanger are simultaneously connected to the intermediate heat exchanger.

2. The vehicle thermal management system (100) according to claim 1, wherein the regulating valve (115) is a stepless regulating valve.

3. The vehicle thermal management system (100) according to claim 1 or 2, wherein the vehicle thermal management system comprises a controller that communicates with the regulating valve (115), the first throttling element (117), the second throttling element (118), the third throttling element (119), or any combination thereof.

4. The vehicle thermal management system (100) according to claim 3, comprising:
a compartment cooling and battery cooling mode, wherein, the controller instructs to turn on the first throttling element (117), the second throttling element (118), the first port (112a) and second port (112b) of the first three-way valve (112), and the regulating valve (115), and to turn off the third throttling element (119), and the third port (112c) of the first three-way valve, so that the first throttling element and the second throttling element play a throttling role, thereby allowing a first part of refrigerant of the air conditioning system to sequentially flow through the exhaust port (111a) of the compressor (111), the first port of the first three-way valve, the second port of the first three-way valve, the first outdoor heat exchanger, the first throttling element, the indoor heat exchanger, the regulating valve (115) and the suction port of the compressor, and at the same time allowing a second part of the refrigerant of the air conditioning system to sequentially flow through the exhaust port of the compressor, the first port of the first three-way valve, the second port of the first three-way valve, the first outdoor heat exchanger, the second throttling element, the intermediate heat exchanger, and the suction port of the compressor; and
the controller instructs to turn on the first port and second port of the second three-way valve, and to turn off the third port of the second three-way valve, so that the coolant of the battery cooling system sequentially flows through the outlet (112a) of the battery cooling device, the first port (123a) of the second three-way valve, the second port (123b) of the second three-way valve, the intermediate heat exchanger (116), and the inlet of the battery cooling device.

5. The vehicle thermal management system (100) according to any preceding claim, comprising:
a compartment heating and battery cooling mode, wherein, the controller instructs to turn on the third throttling element (119), the first port (112a) and third port (112c) of the first three-way valve (112), and to turn off the first throttling element (117), the second throttling element (118), the second port (112b) of the first three-way valve, and the regulating valve (115), so that the third throttling element plays a throttling role, thereby allowing the refrigerant of the air conditioning system to sequentially flow through the exhaust port (111a) of the compressor (111), the first port of the first three-way valve, the third port of the first three-way valve, the indoor heat exchanger, the third throttling element, the intermediate heat exchanger, and the suction port of the compressor; and
the controller instructs to turn on the first port (123a) and second port (123b) of the second three-way valve (123), and to turn off the third port of the second three-way valve, so that the coolant of the battery cooling system sequentially flows through the outlet of the battery cooling device, the first port of the second three-way valve, the second port of the second three-way valve, the intermediate heat exchanger, and the inlet (122b) of the battery cooling device.

6. The vehicle thermal management system (100) according to any preceding claim, comprising:
a compartment cooling and battery natural cooling mode, wherein, the controller instructs to turn on the first throttling element (117), the first port (112a) and second port (112b) of the first three-way valve (112), and the regulating valve (115), and to turn off the second throttling element (118), the third throttling element (119), and the third port (112c) of the first three-way valve (112), so that the first throttling element plays a throttling role, thereby allowing the refrigerant of the air conditioning system to sequentially flow through the exhaust port of the compressor (111), the first port of the first three-way valve, the second port of the first three-way valve, the first outdoor heat exchanger (113), the first throttling element, the indoor heat exchanger (114), the regulating valve and the suction port (111b) of the compressor; and
the controller instructs to turn on the first port (123a) and third port (123c) of the second three-way valve (123), and to turn off the second port of the second three-way valve, so that the coolant of the battery cooling system sequentially flows through the outlet of the battery cooling device (122), the first port of the second three-way valve, the third port of the second three-way valve, the second outdoor heat exchanger (121), and the inlet (122b) of the battery cooling device.

7. A vehicle thermal management system (200), comprising:
an air conditioning system (210), comprising a compressor (211), a first three-way valve (212), a first outdoor heat exchanger (213), an indoor heat exchanger (214), a regulating valve (215), an intermediate heat exchanger (216), a first one-way valve (219A), a second one-way valve (219B), and a first throttling element (217) and a second throttling element (218) with a shut-off function connected through pipelines, wherein, the first three-way valve has a first port (212a) for communicating with an exhaust port (211a) of the compressor, a second port (212b) for communicating with a first end of the first outdoor heat exchanger (213), and a third port (212c) for communicating with a first end of the indoor heat exchanger (214); wherein a second end of the first outdoor heat exchanger is connected to the first end of the indoor heat exchanger through the first throttling element, and at the same time, the second end of the first outdoor heat exchanger is connected to a suction port (211b) of the compressor through the first one-way valve, the second throttling element, and the intermediate heat exchanger; wherein a second end of the indoor heat exchanger is connected to the suction port of the compressor through the regulating valve, and at the same time the second end of the indoor heat exchanger is connected to the suction port of the compressor through the second one-way valve, the second throttling element, and the intermediate heat exchanger; and
a battery cooling system (220), comprising a second outdoor heat exchanger (221), a battery cooling device (222), and a second three-way valve (223) connected through pipelines, wherein, the second three-way valve (223) has a first port (223a) for communicating with an outlet (222a) of the battery cooling device, a second port (223b) for communicating with the intermediate heat exchanger, and a third port (223c) for communicating with a first end of the second outdoor heat exchanger; wherein an inlet (222b) of the battery cooling device and a second end of the second outdoor heat exchanger are simultaneously connected to the intermediate heat exchanger.

8. The vehicle thermal management system (200) according to claim 7, wherein the regulating valve (215) is a stepless regulating valve.

9. The vehicle thermal management system according to claim 7 or 8, wherein the vehicle thermal management system comprises a controller that communicates with the regulating valve (215), the first throttling element (217), the second throttling element (218), or any combination thereof.

10. The vehicle thermal management system according to claim 9, comprising:
a compartment cooling and battery cooling mode, wherein, the controller instructs to turn on the first throttling element (217), the second throttling element (218), the first port (212a) and second port (212b) of the first three-way valve (212), and the regulating valve (215), and to turn off the third port (212c) of the first three-way valve (212), so that the first throttling element and the second throttling element play a throttling role, thereby allowing a first part of refrigerant of the air conditioning system to sequentially flow through the exhaust port (211a) of the compressor (211), the first port of the first three-way valve, the second port of the first three-way valve, the first outdoor heat exchanger (213), the first throttling element, the indoor heat exchanger (214), the regulating valve, and the suction port (211b) of the compressor, and at the same time allowing a second part of the refrigerant of the air conditioning system to sequentially flow through the exhaust port of the compressor, the first port of the first three-way valve, the second port of the first three-way valve, the first outdoor heat exchanger, the first one-way valve (219A), the second throttling element (218), the intermediate heat exchanger (216), and the suction port (211b) of the compressor; and
the controller instructs to turn on the first port and the second port of the second three-way valve, and turn off the third port of the second three-way valve, so that coolant of the battery cooling system sequentially flows through the outlet (222a) of the battery cooling device (222), the first port (223a) of the second three-way valve (223), the second port (223b) of the second three-way valve (223), the intermediate heat exchanger (216), and the inlet (222b) of the battery cooling device.

11. The vehicle thermal management system (200) according to claim 9 or 10, comprising:
a compartment heating and battery cooling mode, wherein, the controller instructs to turn on the second throttling element (218), the first port (212a) and third port (212c) of the first three-way valve (212), and to turn off the first throttling element (217), the second port (212b) of the first three-way valve (212), and the regulating valve (215), so that the second throttling element (218) plays a throttling role, thereby allowing the refrigerant of the air conditioning system to sequentially flow through the exhaust port (211a) of the compressor (211), the first port of the first three-way valve, the third port of the first three-way valve, the indoor heat exchanger (214), the second one-way valve (219B), the second throttling element, the intermediate heat exchanger (216), and the suction port (211b) of the compressor; and
the controller instructs to turn on the first port and second port of the second three-way valve, and to turn off the third port of the second three-way valve, so that the coolant of the battery cooling system (220) sequentially flows through the outlet (222a) of the battery cooling device (222), the first port (223a) of the second three-way valve (223), the second port (223b) of the second three-way valve (223), the intermediate heat exchanger (216), and the inlet (222b) of the battery cooling device.

12. The vehicle thermal management system (200) according to claim 9, 10 or 11, comprising:
a compartment cooling and battery natural cooling mode, wherein, the controller instructs to turn on the first throttling element (217), the first port (212a) and second port (212b) of the first three-way valve (212), and the regulating valve (215), and to turn off the second throttling element (218), and the third port (212c) of the first three-way valve (212), so that the first throttling element (217) plays a throttling role, thereby allowing the refrigerant of the air conditioning system to sequentially flow through the exhaust port (211a) of the compressor (211), the first port of the first three-way valve, the second port of the first three-way valve, the first outdoor heat exchanger (213), the first throttling element, the indoor heat exchanger (214), the regulating valve and the suction port (211b) of the compressor; and
the controller instructs to turn on the first port (223a) and third port (223c) of the second three-way valve (223), and turn off the second port of the second three-way valve, so that the coolant of the battery cooling system (220) sequentially flows through the outlet (222a) of the battery cooling device (222), the first port of the second three-way valve, the third port of the second three-way valve, the second outdoor heat exchanger (221), and the inlet (222b) of the battery cooling device.

13. A transportation refrigeration vehicle, comprising: a vehicle thermal management system according to any of claims 1 to 12.
